# EUROPEAN PATENT APPLICATION

(11) **EP 1 201 974 A2**
(43) Date of publication of application: **02.05.2002**
(21) Application number: 01125524.7
(22) Date of filing: 25.10.2001
(51) Int. Cl.: F16J 15/18

(54) **Improvements relating to sealing devices**

(30) Priority: 26.10.2000 GB 0026182
(71) Applicant: Pond, Richard James, Nailsworth, Gloucestershire GL6 0AV (GB)
(72) Inventor: Pond, Richard James, Nailsworth, Gloucestershire GL6 0AV (GB)
(74) Representative: James, Michael John Gwynne

(57) **Abstract**

A metal leaf seal comprises a stack of vee-rings 4 of identical shape, which perform a sealing function between a housing 2 and a metal shaft 3. Upper and lower former rings 5 hold the stack of vee-rings in place. The stack of vee-rings 4 can additionally be held together by an electron beam isolation weld 7 which nevertheless allows each vee-ring 4 to flex independently. With pressure applied, a reciprocating sealing face is formed at the edges 9 of the vee-rings 4, with pressure energisation created against the face of the seal at 10 adding further load to the preloaded seal edges at 9. A static sealing interface with the housing 2 is formed at 11.

## Description

In order to contain pressure within a reciprocating shaft housing, a seal mechanism is required to seal the shaft from inside to outside or vice versa. Traditionally, this has been achieved by usinq resilient packings or resilient moulded seal rings to fill the running clearance between shaft and housing bore. For low pressures, ambient temperatures and non-aggressive contained fluids this is a perfectly satisfactory approach which has been successfully used over the centuries.

However, with today's ever increasing demands on pressure and temperature levels together with containment of highly aggressive fluids, resilient seals have limitations, especially where high temperature and long life operation is required.

An ideal solution is to use a metal to metal seal element. Metal seals for reciprocating applications are available, but tend to be of light construction. These do not have the rugged proportions required for many applications, especially where long life with high-pressure containment is required.

According to the invention there is provided a metal leaf seal comprising an array of metal sealing rings in the form of vee-rings which are each of V-form in cross-section, from the inner to outer rims of the ring, the vee-rings being located successively within each other to create a stack, and upper and lower former rings, which retain said stack of sealing rings.

This metal leaf seal concept provides a rugged flexible metal sealing element, which is pressure-energised onto a moving or static shaft to provide metal-to-metal sealing. This allows operation above the temperature limitations of resilient materials and also provides great wear resistance for long life sealing.

Thus the flexible metal sealing element can be made up of a series of identical vee-rings stacked on top of one another. The thickness of each vee-ring will ideally be of the order of 0.005" thickness or less, so that the contact edges of the ring are flexible enough to follow the running clearance of the shaft to housing. However, by stacking, say, 20 rings on top of one another, the shear strength is equal to the total thickness. To provide overall support to the stack, the seal stack bears against the upper and lower former rings. Ideally, these former rings will nest with the V-shape of the stack of sealing rings. One or both, but preferably the rear former ring, ideally has an angle defining an approximately 1° differential between the ring and the former to allow the ring stack to move with pressure energisation to settle against the shaft.

The rings may be loosely stacked together. However, if desired, holding together of the stack, and also to prevent pressure passing from one side of the seal to the other, can be achieved by a continuous electron beam weld made near to the centre of the vee-ring profile. As with stacking chairs, there is usually a gap to accommodate identical geometry between each piece. With the vee-rings this occurs near to the centre. It is preferred, therefore, that the beam weld should be positioned near to the centre of the vee-ring, where the leaves first bed down on each other. This now allows each seal leaf freedom to flex independently and this enables the sealing effect to be self-adjusting.

The seal stack may be considered as a cantilever being fixed at the centre of the vee-ring. If, for example, a solid ring were to be considered, there would be a maximum bending moment wherein its strength and therefore flexibility will be proportional to the square of its section depth. Its shear strength will be directly proportional to its depth.

If, in the case of the metal leaf seal, the section depth is divided up into a series of leaves to equal the total depth of the section, where each leaf is allowed to slide over the next with the same bending moment, the flexibility is increased by the sum of the squares of each leaf, i.e. for ten leaves the flexibility is ten times greater than that of an equivalent solid cantilever. The beam strength also reduces by ten times, but by having former rings back and front, the leaf thickness can be sized to accommodate the running clearance between the shaft and the former.

However, although the bending strength has been reduced by ten times, the collective shear strength is substantially equal to that of the solid cantilever and hence the seal has considerable strength to withstand high-pressure loading.

By having a small flexible interference fit on the leaves, pressure applied on the upstream side will pressure-energise the leaves onto the reciprocating shaft and therefore provide a seal on the leading rings with physical support from the remainder of the stack. The same effect will also take place from the seal to the housing recess, thereby providing a total seal for the housing and the shaft.

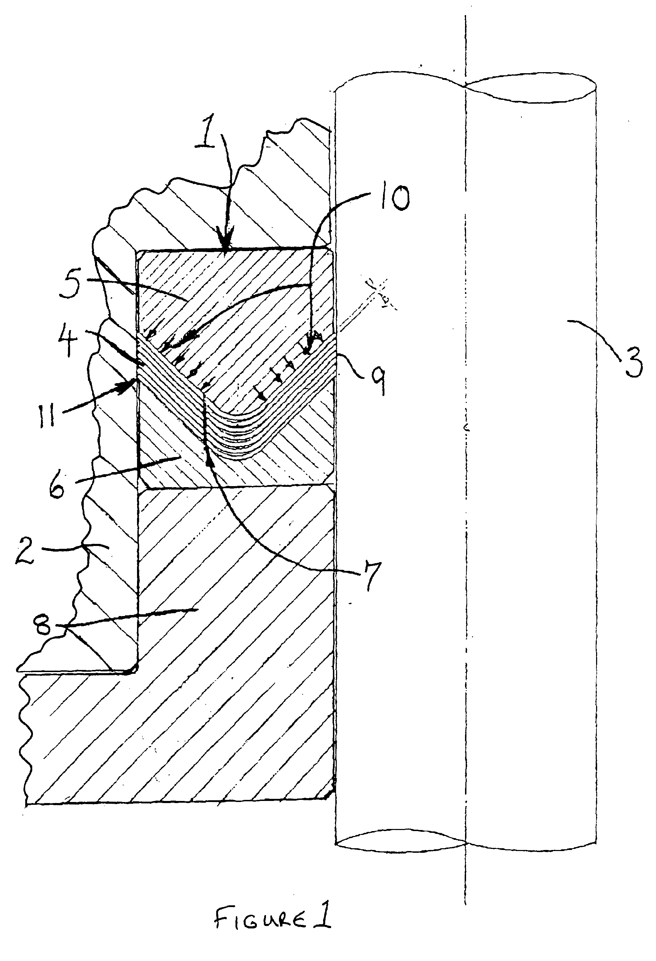

The invention may be performed in various ways and a preferred embodiment thereof will now be described, with reference to the accompanying Figure 1 which illustrates, in cross-section, a metal leaf seal of this invention performing a sealing function.

The metal leaf seal shown in the drawing is indicated at 1 and performs a sealing function between a housing 2 and a metal shaft 3. The essential part of the metal leaf seal comprises a stack of vee-rings 4 of identical shape. These are bound by an upper former ring 5, which is shaped to nest into the shape of the vee-rings 4 and a lower former ring 6 which is shaped to receive the stack of vee-rings 4. The stack of vee-rings 4 is additionally held together by an electron beam isolation weld 7 which nevertheless allows each vee-ring 4 to flex independently. There is also a load ring 8 which holds the seal assembly into the seal housing recess to bear up onto ring 6 at the base of the housing. As there is a small differential angle between rings 5 and 6 to the seal assembly. This differential load creates preload of the seal onto the shaft and housing prior to pressure being applied. With pressure applied, a reciprocating sealing face is formed at the edges 9 of the vee-rings 4, with pressure energisation created against the face of the seal at 10 adding further load to the preloaded seal edges at 9. A static sealing interface with the housing 2 is formed at 11.

It will be appreciated that the term "ring" used herein does not necessarily denote a circular form, but that the "ring" is shaped to conform to the shape of the interengaging housing and the actuator located therein to carry out the required sealing function.

## Claims

1. A metal leaf seal comprising an array of metal sealing rings in the form of vee-rings which are each of V-form in cross-section, from the inner to outer rims of the ring, the vee-rings being located successively within each other to create a stack, and upper and lower former rings, which retain said stack of sealing rings.

2. A leaf seal according to claim 1, wherein said array is made up of a series of identical vee-rings stacked on top of one another.

3. A leaf seal according to claim 1 or claim 2, wherein the thickness of each vee-ring is of the order of 0.005" thickness or less.

4. A leaf seal according to any one of claims 1 to 3, wherein the former rings nest with the V-shape of the stack of sealing rings.

5. A leaf seal according to any one of claims 1 to 4, wherein one or both of the former rings has an angle defining an approximately 1° differential between the sealing ring and the former ring.

6. A leaf seal according to any one of claims 1 to 5, wherein the sealing rings are loosely stacked together.

7. A leaf seal according to any one of claims 1 to 5, wherein the sealing rings are held together by a continuous electron beam weld made near to the centre of the vee-ring profile.

8. A metal leaf seal substantially as herein described with reference to the accompanying drawings.

9. Any novel combination of features of a metal leaf seal as described herein and/or as illustrated in the accompanying drawings.
